# EUROPEAN PATENT SPECIFICATION

(11) **EP 2 991 326 B1**
(45) Date of publication and mention of the grant of the patent: **08.03.2017**
(21) Application number: 15180909.2
(22) Date of filing: 13.08.2015
(51) Int. Cl.: H04M 1/2745, H04M 3/44

(54) **METHOD, APPARATUS AND COMPUTER PROGRAM PRODUCT FOR PROCESSING COMMUNICATION IDENTIFICATION**
VERFAHREN, VORRICHTUNG UND COMPUTERPROGRAMMPRODUKT FÜR VERARBEITUNGSKOMMUNIKATIONSIDENTIFIZIERUNG
PROCÉDÉ, APPAREIL ET PRODUIT DE PROGRAMME INFORMATIQUE DE TRAITEMENT D'IDENTIFICATION DE COMMUNICATION

(30) Priority: 25.08.2014 CN 201410422952
(43) Date of publication of application: 02.03.2016
(73) Proprietor: Xiaomi Inc., Beijing 100085 (CN)
(72) Inventor: HUANG, Fei, 100085 Haidian District (CN); BAO, Xiehao, 100085 Haidian District (CN); NIU, Kun, 100085 Haidian District (CN)
(74) Representative: Reeve, Nicholas Edward

(56) References cited:
- CN-A- 102 104 685
- CN-A- 104 168 356
- US-A1- 2008 207 271

## Description

### TECHNICAL FIELD

The present disclosure relates to a field of communication and computer processing, and more particularly to a method and an apparatus for processing communication identification.

### BACKGROUND

With the development of Internet technology, people may contact and communicate with others in various ways such as telephone, SMS, email and IM (instant messaging). And, a person may possess a plurality of phone numbers, a plurality of emails and a plurality of IM accounts, and the like.

It is found by the inventor of the present disclosure that, in the related art, a plurality of phone numbers of a contact may exist in an address book. When it is required to call the contact, a plurality of phone numbers may be obtained, and it can not be determined which of the phone numbers to dial. Or, it is possible to dial a phone number thereof randomly. But the phone number dialed randomly may be a phone number that the contact does not often use, which make the probability that the telephone cannot be connected or the telephone is not answered higher.

Therefore, in the related art, in the case that a contact has a plurality of communication identifications, the used communication identification is not accurate enough, and the probability of contact failure is greater.
US 2008/0207271 A1 discloses methods and mobile communication devices for providing a history of communications with a contact according to at least one of a plurality of communication types. CN 102 104 685 A discloses a default contact number updating method and a terminal, in which the terminal receives a contact request, and acquires contact information.

### SUMMARY OF THE INVENTION

In order to overcome the problems in the related art, the present disclosure provides a method and an apparatus for processing communication identification.

According to a first aspect of the invention, there is provided a method for processing communication identification, including:
obtaining communication records about a plurality of communication identifications of a user;
determining use frequencies according to the obtained communication records, each use frequency corresponding to a respective communication identification in the plurality of communication identifications, respectively when the communication identification is used to identify the user as a sender and a receiver;
determining the communication identification with the highest use frequency as often-used communication identification according to the use frequencies corresponding to the respective communication identifications, by: for each of the communication identifications, judging whether a difference value between the use frequency of the communication identification when used to identify the user as a sender and the use frequency of the communication identification when used to identify the user as a receiver is in a range of a preset difference value; when the difference value is in the range of the preset difference value, determining that the communication identification is used to identify the user as a receiver, and determining the use frequency of the communication identification when used to identify the user as a receiver; and determining, from the communication identifications determined as identifying the user as a receiver, the communication identification with the highest use frequency when used to identify the user as a receiver as the often-used communication identification ; and
generating a markup instruction according to the often-used communication identification, and sending the markup instruction to a terminal storing the communication identifications of the user, so that the often-used communication identification of the user is marked by the terminal.

The technical solutions provided by the embodiments of the present disclosure may include the following advantageous effects: the present embodiment can judge the use degree of the plurality of communication identifications according to the communication records actually occurred, determine the most often-used communication identification, and inform other user of the communication identification. It is convenient for other user to contact the user according to the communication identification, and it facilitates improving the probability of contact success.

The determining the use frequencies corresponding to the respective communication identifications according to the obtained communication records includes:
determining the use frequencies corresponding to the respective communication identifications when used as receivers or senders according to the obtained communication records; and
the determining the communication identification with the highest use frequency according to the use frequencies corresponding to the respective communication identifications includes:
   determining the communication identification with the highest use frequency according to the use frequencies corresponding to the respective communication identifications when used as the receivers or the senders.

The technical solutions provided by the embodiments of the present disclosure may include the following advantageous effects: the present embodiment may determine the often-used communication identification according to the use frequencies of the communication identification when used as a receiver. For the case that other user contacts with the user, the other user is used as a sender, and the user is used as a receiver. Therefore, for the other user, a convenient communication identification as the receiver is the often-used communication identification. Thus, the often-used communication identification determined in this manner is more accurate. The present embodiment may also determine the often-used communication identification according to the use frequencies of the communication identification when used as the sender. The solution may be applied to the situation of fewer communication records.

The determining the use frequencies corresponding to the respective communication identifications according to the obtained communication records includes:
determining use frequencies respectively corresponding to the respective communication identifications when used as senders and receivers according to the obtained communication records; and
the determining the communication identification with the highest use frequency as the often-used communication identification according to the use frequencies corresponding to the respective communication identifications includes:
   for each of the communication identifications, judging whether a difference value between use frequency of the communication identification when used as the sender and use frequency of the communication identification when used as the receiver is in a range of a preset difference value;
   determining the communication identification is the receiver, and determining the use frequency of the communication identification when the difference value between the use frequency when used as the sender and the use frequency when used as the receiver is in the range of the preset difference value; and
   determining the communication identification with the highest use frequency in the communication identifications when used as the receivers as the often-used communication identification.

The technical solutions provided by the embodiments of the present disclosure may include the following advantageous effects: in the present embodiment the use frequency of the communication identification when used as the senders is compared with the use frequency of the communication identification when used as the receivers, if the use frequency when used as the receivers is higher, the communication identification is determined as often-used communication identification when used as the receivers, and is further determined as the communication identification with the highest use frequency. The communication identification determined in this manner is the communication identification that the other user usually contacts, and it is easier to contact the user through the communication identification. Therefore, it is more accurate to determine the communication identification as the often-used communication identification.

The determining the use frequencies corresponding to the respective communication identifications according to the obtained communication records includes:
determining the use frequencies respectively corresponding to the respective communication identifications when used as the receivers according to the obtained communication records; and
the determining the communication identification with the highest use frequency as the often-used communication identification according to the use frequencies corresponding to the respective communication identifications includes:
   determining the maximum use frequency among the use frequencies corresponding to the respective communication identifications when used as the receivers;
   judging whether the maximum use frequency when used as the receiver is greater than a preset receiver threshold; and
   determining the communication identification corresponding to the maximum use frequency when used as the receivers as the often-used communication identification if the maximum use frequency when used as the receivers is greater than the preset receiver threshold.

The technical solutions provided by the embodiments of the present disclosure may include the following advantageous effects: the present embodiment pays more attention to the use frequency of the communication identification when used as the receiver; for a contact of a user when contacting with the user, the user is used as the receiver, so that the use frequency of the communication identification when used as the receiver is more important, whereby the determined often-used communication identification is more accurate.

The determining the use frequencies corresponding to the respective communication identifications when used as the receivers includes:
determining the use frequencies corresponding to the respective communication identifications when used as the receivers according to connected states of the communication records and weight values corresponding to the connected state;
wherein the communication records are call records, the connected state includes: a call signal is connected and the called party answers, the call signal is connected and the called party does not answer and the call signal is not connected, which respectively corresponding to a first weight value, a second weight value and a third weight value, the first weight value is greater than the second weight value and is greater than the third weight value.

The technical solutions provided by the embodiments of the present disclosure may include the following advantageous effects: the situation of the call are subdivided in the present embodiment, whereby the use frequencies of the communication records when used as receiver may be determined more accurately, and the often-used communication identification may be further determined more accurately.

The determining the use frequencies corresponding to the respective communication identifications according to the obtained communication records includes:
determining the use frequencies corresponding to the respective communication identifications according to occurrence time and occurrence times of the respective communication identifications in the communication records obtained in a preset time length.

The technical solutions provided by the embodiments of the present disclosure may include the following advantageous effects: the present embodiment may take account of occurrence time and occurrence times of the communication identification to determine the use frequency, so that the result of the determination is more accurate.

According to a second aspect of the invention, there is provided an apparatus for processing communication identification, including:
an acquisition module configured to obtain communication records about a plurality of communication identifications of a user;
a frequency module configured to determine use frequencies according to the obtained communication records, each use frequency corresponding to a respective communication identifications in the plurality of communication identifications, respectively when the communication identification is used to identify the user as a sender and a receiver;
a determining module configured to determine communication identification with the highest use frequency as often-used communication identification according to the use frequencies corresponding to the respective communication identifications, the determining module comprising: a first judging sub-module configured to, for each of the communication identifications, judge whether a difference value between use frequency of the communication identification when used to identify the user as a sender and the use frequency of the communication identification when used to identify the user as a receiver is in a range of a preset difference value; a second determining sub-module configured to, when the difference value is in the range of the preset difference value, determine that the communication identification is used to identify the user as a receiver, and determine the use frequency of the communication identification when used to identify the user as a receiver; and a third determining sub-module configured to determine, from the communication identifications determined as identifying the user as a receiver, the communication identification with the highest use frequency when used to identify the user as a receiver as the often-used communication identification; and
a sending module configured to generate a markup instruction according to the often-used communication identification, and send the markup instruction to a terminal storing the communication identifications of the user, so that the often-used communication identification of the user is marked by the terminal.

In an embodiment, the frequency module includes: a first frequency sub-module configured to determine the use frequencies corresponding to the respective communication identifications when used as receivers or senders according to the obtained communication records.

the determining module includes: a first determining sub-module configured to determine the communication identification with the highest use frequency according to the use frequencies corresponding to the respective communication identifications when used as the receivers or the senders.

In an embodiment, the frequency module includes: a second frequency sub-module configured to determine the use frequencies respectively corresponding to the respective communication identifications when used as senders and receivers according to the obtained communication records; and
the determining module includes:
a first judging sub-module configured to judge whether a difference value between use frequency of the communication identification when used as the sender and use frequency of the communication identification when used as the receiver is in a range of a preset difference value, for each of the communication identifications;
a second determining sub-module configured to determine the communication identification is the receiver, and determining the use frequency of the communication identification when the difference value between the use frequency when used as the sender and the use frequency when used as the receiver is in the range of the preset difference value;
   and
a third determining sub-module configured to determine the communication identification with the highest use frequency in the communication identifications when used as the receivers as the often-used communication identification.

In an embodiment, the frequency module includes: a second frequency sub-module configured to determine the use frequencies respectively corresponding to the respective communication identifications when used as the receivers according to the obtained communication records; and
the determining module includes:
a fourth determining sub-module configured to determine the maximum use frequency among the use frequencies corresponding to the respective communication identifications when used as the receivers;
a second judging sub-module configured to judge whether the maximum use frequency when used as the receiver is greater than a preset receiver threshold; and
a fifth determining sub-module configured to determine the communication identification corresponding to the maximum use frequency when used as the receiver as the often-used communication identification if the maximum use frequency when used as the receiver is greater than the preset receiver threshold.

In an embodiment, the determining module includes:
a sixth determining sub-module configured to determine the use frequencies corresponding to the respective communication identifications when used as the receivers according to connected states of the communication records and weight values corresponding to the connected state;
wherein the communication records are call records, the connected state includes: a state in which a call signal is connected and the called party answers, a state in which the call signal is connected and the called party does not answer and a state in which the call signal is not connected, which respectively corresponds to a first weight value, a second weight value and a third weight value, wherein the first weight value is greater than the second weight value and is greater than the third weight value.

In an embodiment, the frequency module includes:
a third frequency sub-module configured to determine the use frequencies corresponding to the respective communication identifications according to occurrence time and occurrence times of the respective communication identifications in the communication records obtained in a preset time length.

According to a third aspect of the invention, there is provided an apparatus for processing communication identification, including:
a processor; and
a memory for storing instructions executable by the processor;
wherein the processor is configured to:
   obtain communication records about a plurality of communication identifications of a current user;
   determine use frequencies corresponding to respective communication identifications in the plurality of communication identifications according to the obtained communication records;
   determine communication identification with the highest use frequency as often-used communication identification according to the use frequencies corresponding to the respective communication identifications; and
   generate a markup instruction according to the often-used communication identification, and send the markup instruction to a terminal storing the communication identifications of the current user, so that the often-used communication identification of the current user is marked by the terminal.

According to a fourth aspect of the invention, there is provided a computer program product stored on a computer usable medium, comprising computer-readable program means for causing a mobile terminal to implement the above methods.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for processing communication identification according to an exemplary embodiment.
Fig. 2 is a flow chart showing a method for processing communication identification according to an exemplary embodiment.
Fig. 3 is a flow chart showing a method for processing communication identification according to an exemplary embodiment.
Fig. 4 is a block diagram showing an apparatus for processing communication identification according to an exemplary embodiment.
Fig. 5 is a block diagram showing a frequency module according to an exemplary embodiment.
Fig. 6 is a block diagram showing a determining module according to an exemplary embodiment.
Fig. 7 is a block diagram showing a frequency module according to an exemplary embodiment.
Fig. 8 is a block diagram showing a determining module according to an exemplary embodiment.
Fig. 9A is a block diagram showing a second frequency sub-module according to an exemplary embodiment.
Fig. 9B is a block diagram showing a determining module according to an exemplary embodiment.
Fig. 9C is a block diagram showing a determining module according to an exemplary embodiment.
Fig. 10 is a block diagram showing a frequency module according to an exemplary embodiment.
Fig. 11 is a block diagram showing an apparatus according to an exemplary embodiment.
Fig. 12 is a block diagram showing an apparatus according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In the related art, a plurality of phone numbers of a user b, that is, a phone number 1 and a phone number 2, are stored in an address book of a mobile terminal of a user a. Herein, the phone number 1 is a phone number often used by the user b in the past. The phone number 2 is a phone number often used by the user b now. It is possible for the user a to contact the user b for a period of time and it is deemed that the user b still often uses the phone number 1. In this case, the user a uses the phone number 1 to contact the user b. However, since the user b does not often use the phone number 1 now, the case that the telephone cannot be connected (such as the telephone is not answered) may occur. In order to solve the problem, the present embodiment analyses the use situation of respective phone numbers of the user b according to call records of the user b, then determines the use frequencies of the respective phone number, and determines often-used phone number according to the use frequencies. According to the phone number, the present embodiment may be extended in various communication identifications, such as phone number, email and IM account, and the like. The communication identification of a contact is therefore any piece of information identifying a way of communicating with that contact, such as a contact ID.

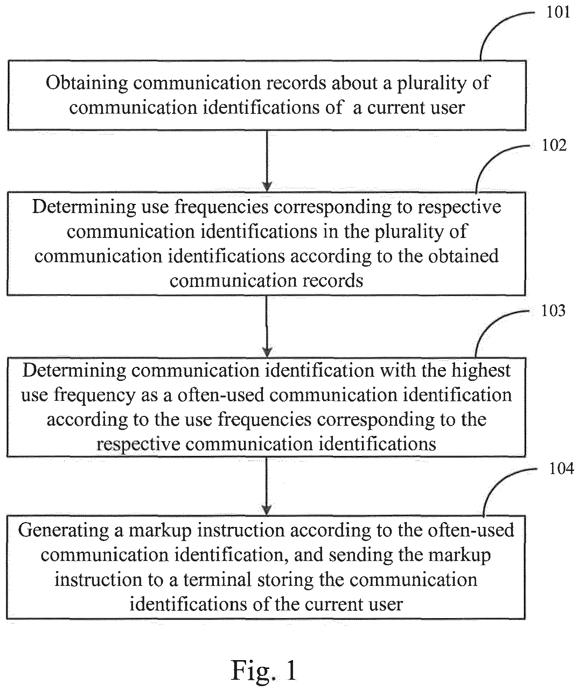

Fig. 1 is a flow chart showing a method for processing communication identification according to an exemplary embodiment. As shown in Fig. 1, the method may be implemented by a mobile terminal or a server, and include the following steps.

In step 101, communication records about a plurality of communication identifications of a current user are obtained.

In the present embodiment, the communication identification includes, but is not limited to, phone number, E-mail address, and the like.

In step 102, use frequencies corresponding to respective communication identifications in the plurality of communication identifications are determined according to the obtained communication records.

In step 103, the communication identification with the highest use frequency as often-used communication identification is determined according to the use frequencies corresponding to the respective communication identifications.

In step 104, a markup instruction is generated according to the often-used communication identification, and the markup instruction is sent to a terminal storing the communication identifications of the current user, so that the often-used communication identification of the current user is marked by the terminal.

The present embodiment judges the degree of use of the plurality of communication identifications according to the communication records that actually occur, determines the most often-used communication identification, and informs other user of the communication identification. It is convenient for the other user to contact the user through the communication identification, and it is facilitated to improve the possibility of contact success.

For example, a user a has communication identifications 1 to 3, and the use frequency is counted respectively as for the communication identifications 1 to 3. The result is that the use frequency of the communication identification 1 is 120, the use frequency of the communication identification 2 is 150, and the use frequency of the communication identification 3 is 40. The use frequency of the communication identification 2 is highest, which illustrates that the user a or a contact of the user a often uses the communication identification 2 to communicate. Therefore, the communication identification 2 is determined as the often-used communication identification, and is informed of the other user. If the user b always contacted with the user a through the communication identification 1 in the past, after receiving the notification, the user b may use the communication identification 2 to communicate with the user a, which may improve the success rate of communication.

In an embodiment, the communication identification may be a phone number, an email account, an IM account, and the like. The other user in step 104 may be a contact in an address book. The address book may be a phone address book, an address book in email, a contact list in IM software, and the like.

In an embodiment, the communication records obtained in step 101 may come from a user (namely, the current user), or may also come from a plurality of users. The communication records are obtained from the plurality of users so that the basic data used for the subsequent determination of the use frequency is more plentiful and more comprehensive, whereby the determination of the use frequency is more accurate. And, a user providing the communication records may be a user in the address book, whereby interference of the communications records generated for an unknown user may be reduced, for example, interference of the communications records used for advertising promotion may be reduced. The obtained often-used communication identification is convenient for the genuine contact to contact the user.

In an embodiment, the embodiment shown in Fig. 1 may be implemented by a mobile terminal, or may be implemented by a server.

If it is implemented by the mobile terminal, the mobile terminal determines the use frequencies of respective local communication identifications according to the local communication records or the other user's communication records obtained via the network, and then determines the often-used communication identification, and sends it to the other user via the network. The network includes wired and wireless networks, wherein the wireless network includes WiFi, Bluetooth, NFC, and the like. The mobile terminal may send the often-used communication identification to other user in the form of SMS, email, IM message, and the like. The other user marks the communication identification as the often-used communication identification in the local address book after receiving the often-used communication identification.

If it is implemented by the server, the server obtains the communication records from the plurality of users. For the respective communication identifications of each of the users, the server counts the use frequency according to the communication records related to the user. Then, the server determines the often-used communication identification for each user, and sends the determined often-used communication identification to the other user. Similarly to the mobile terminal, the server may obtain the communication records through the network from the plurality of users, and send the often-used communication identification to the other user. The form of obtaining the communications records and sending the often-used communication identification may be SMS, email, IM message, and the like, or may also use such a manner as software configuration or data synchronization, and the like.

In an embodiment, the use frequency may be counted as for the communications records sent through the communication identification or the communications records received through the communication identification, so as to determine the often-used communication identification. In step 102 and step 103, the implementation may be carried out in a manner A and a manner B.
Manner A:
   the use frequencies corresponding to the respective communication identifications when used as a receiver are determined according to the obtained communication records; and
   the communication identification with the highest use frequency is determined according to the use frequencies corresponding to the respective communication identifications when used as the receivers.
      The present embodiment may determine the often-used communication identification as for the use frequency of the communication identification when used as the receivers. For the other user, when contacting with the user, the other user is used as the sender, and the user is used as the receiver. Therefore, for the other user, the communication identification conveniently used as the receiver is the often-used communication identification. Thus, the often-used communication identification determined in this manner is more accurate.
      For example, the user a has communication identifications 1 to 3, the use frequencies of the communication identifications 1 to 3 used as the receivers are counted. If there are 50 communication records of the communication identification 1 as the sender and there are 20 communication records as the receiver, the use frequency as the receivers is 20. If there are 10 communication records of the communication identification 2 as the sender and there are 60 communication records as the receiver, the use frequency when used as the receivers is 60. If there are 30 communication records of the communication identification 3 as the sender and there are 30 communication records used as the receiver, the use frequency as the receivers is 30. Therefore, the use frequency of the communication identification 2 used as the receiver is highest, which illustrates that the other user often uses the communication identification 2 to contact the user a, and the communication identification 2 is used as the often-used communication identification, whereby the other user may conveniently contact the user a.
Manner B:
   the use frequency corresponding to the respective communication identifications when used as a sender is determined according to the obtained communication records; and
   the communication identification with the highest use frequency is determined according to the use frequencies corresponding to the respective communication identifications when used as the senders.
      The present embodiment may determine the often-used communication identification as for the use frequency of the communication identification when used as the sender. The often-used communication identification determined in this manner is communication identification that the user often uses to contact, whereby the possibility of contact success of the user through the communication identification is higher. And, if the communication records obtained from the other user are less, that is, the basic data used to count the use frequency is less, this may result in the statistics not being accurate enough. In this case, compared with the statistical entire use frequency, the statistical use frequency as the sender is more accurate, and the result is more reliable.
      In an embodiment, concerning step 102 and step 103, the implementation may be carried out in a manner C. The user frequency when used as the sender is compared with the user frequency when used as the receiver.
Manner C:
   the use frequencies respectively corresponding to the respective communication identifications when used as senders and receivers are determined according to the obtained communication records;
   for each of the communication identifications, whether the communication identification is often-used the communication identification when used as the receiver is judged according to the use frequencies respectively corresponding to the communication identification when used as the sender and the receiver; and
   the communication identification is determined as the communication identification with the highest use frequency when the communication identification is the often-used communication identification as the receiver.
      For example, the user a has communication identifications 1 to 3, the use frequencies of the communication identifications 1 to 3 when used as the receivers and the senders are counted. In the example, there are 50 communication records of the communication identification 1 as the sender, and there are 20 communication records as the receiver. There are 10 communication records of the communication identification 2 as the sender, and there are 60 communication records as the receiver. There are 30 communication records of the communication identification 3 as the sender, and there are 30 communication records as the receiver. The use frequency of the communication identification 1 as the sender is (50/20)*(70/(70+70+60))=0.875, the use frequency of the communication identification 1 as the receiver is (20/50)*(70/(70+70+60))=0.14, whereby the use frequency of the communication identification 1 as the sender is higher than the use frequency of the communication identification 1 as the receiver, which illustrates that the communication identification 1 is mainly used to send information. The use frequency of the communication identification 2 as the sender is (10/60)*(70/(70+70+60))=0.058, the use frequency of the communication identification 2 as the receiver is (60/10)*(70/(70+70+60))=2.1, which illustrates that the communication identification 2 is mainly used to receive information. The use frequency of the communication identification 3 as the sender is (30/30)*(60/(70+70+60))=0.3, the use frequency of the communication identification 2 as the receiver is (30/30)*(60/(70+70+60))=0.3, which illustrates that the use frequencies of the communication identification 3 when used as the receiver and the sender is equivalent, and are lower than the use frequency of the communication identification 1 when used as the sender and the use frequency of the communication identification 2 when used as the receiver.
      Since the use frequency of the communication identification 2 when used as the receiver is obviously higher than that when used as the sender (that is, the difference value of them is greater than the preset threshold), the communication identification 2 is used as the often-used communication identification.
      In the present embodiment, the communication identification often used as the receiver is used as the often-used communication identification, whereby it is convenient for the other user to contact the user a, and the possibility of contact success may be improved.
      In an embodiment, in order to highlight the role of the receiver, the communication records used as the receiver and the communication records used as the sender may be distributed with different weight. In step 102, the implementation may be carried out in a manner D.
Manner D:
   the use frequencies corresponding to the respective communication identifications when used as the senders are determined according to a preset weight value and the obtained communication records; and
   the use frequencies corresponding to the respective communication identifications when used as the receivers are determined according to another preset weight value and the obtained communication records;
      Herein, the preset weight value for determining the use frequencies corresponding to the respective communication identifications when used as the receivers is greater than the preset weight value for determining the use frequencies corresponding to the respective communication identifications when used as the senders.
      The present embodiment may highlight the role of the receiver by distributing a greater weight value for the communication record when used as the receiver, and then may determine the often-used communication identification more accurately.
      In an embodiment, concerning step 102 and step 103, the implementation may be carried out in a manner E. The use frequency when used as the sender is compared with the use frequency when used as the receiver.
Manner E:
   the use frequencies respectively corresponding to the respective communication identifications when used as senders and receivers is determined according to the obtained communication records;
   for each of the respective communication identifications, whether a difference value between use frequency of the communication identification when used as the sender and use frequency of the communication identification when used as the receiver is in a range (such as -0.5∼0.5) of a preset difference value is judged;
   it is determined that the communication identification is the receiver, and the use frequency of the communication identification is determined when the difference value between the use frequency when used as the sender and the use frequency when used as the receiver is in the range of the preset difference value; and
   the communication identification with the highest use frequency in the communication identifications when used as the receivers is determined as the often-used communication identification.
      In the present embodiment, the priority of the communication identification when used as the receiver is higher than the priority used as the sender. If the use frequency when used as the sender is not significantly higher than the use frequency when used as the receiver, the communication identification as the receiver is considered to participate in the comparison of the largest use frequency, which facilitates determination of the often-used communication identification more accurately.
      In an embodiment, concerning step 102 and step 103, the implementation may be carried out in a manner F.
Manner F:
   the use frequencies respectively corresponding to the respective communication identifications when used as the receivers are determined according to the obtained communication records;
   the maximum use frequency among the use frequencies corresponding to the respective communication identifications when used as the receiver is determined;
   whether the maximum use frequency when used as the receiver is greater than a preset receiver threshold is judged; and
   the communication identification corresponding to the maximum use frequency when used as the receiver is determined as the often-used communication identification if the maximum use frequency when used as the receiver is greater than the preset receiver threshold.
      In the present embodiment, for a contact of a user, the user is usually a receiver of the communication. Therefore, the use frequency of the communication identification when used as the receiver is paid more attention and whether the communication identification is the often-used communication identification is judged hereby. The often-used communication identification determined in this manner is convenient for the contact to contact the user, and is more accurate.
      In an embodiment, step 102 may also be carried out in a manner G.
Manner G:
   the use frequencies corresponding to the respective communication identifications when used as the receivers are determined according to connected states of the communication records and weight values corresponding to the connected state;
   herein, the communication records are call records, and the connected state comprises: a state in which a call signal is connected and the called party answers, a state in which the call signal is connected and the called party does not answer and a state in which the call signal is not connected, which respectively corresponds to a first weight value, a second weight value and a third weight value, wherein the first weight value is greater than the second weight value and is greater than the third weight value.
      In the present embodiment, the case of calling is subdivided, different weight values are distributed for the different states of calling, and the highest weight value is distributed for the state in which the call signal is connected and the called party answers. Therefore, the use frequency obtained in this manner is more accurate, and then the determined often-used communication identification is also more accurate, so that it is convenient for the user's contact to contact the user.
      In an embodiment, the implementation of step 102 may also be executed in a manner H.
Manner H: the use frequencies corresponding to the respective communication identifications is determined according to occurrence time and occurrence times of the respective communication identifications in the communication records obtained in a preset time length.

The present embodiment combines the occurrence time and occurrence times, that is, when the occurrence time is closer, the weight value corresponding to the communication records is greater; whereas when the occurred time is farther, the weight value corresponding to the communication records is lower. The weight value varies linearly with time, wherein one-dimensional or two-dimensional linear variation can be used.

For example, the weight value corresponding to the communication records which occurred in the most recent month is 100, the weight value corresponding to the communication records which occurred in the 2nd to 6th most recent months is 50, and the weight value corresponding to the communication records which occurred in the 6th to 12th most recent months is 5. The weight value corresponding to the communication records which occurred prior to the most recent 12 months is 0.

In an embodiment, manners A-H may be freely combined.

In an embodiment, the communication records may also be subdivided when the use frequencies are counted. For example, the communication records are call records, the weight value of the communication records in which the call signal is connected and the called party answers is greater than the weight value of the communication records in which the call signal is connected and the called party does not answer. The weight value of the communication records in which the call signal is connected and the called party does not answer is greater than the weight value of the communication records in which the call signal is not connected.

As another example, the communication records are email records. If these are email records in which the email has been replied or forwarded, the weight value of these email records is greater than the weight value of the email records in which the email has not been replied or not been forwarded.

As another example, the communication records are IM records. The weight value of IM records which receives a reply in a preset time length is greater than the weight value of IM records which do not receive the reply in the preset time length.

The implementation process for processing communication identification will be described in detail by the following several examples.

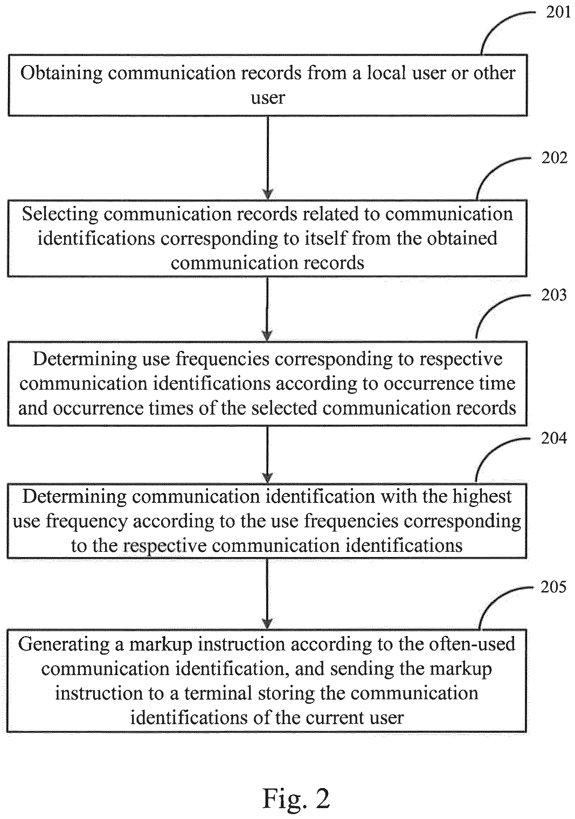

Fig. 2 is a flow chart showing a method for processing communication identification according to an exemplary embodiment. As shown in Fig. 2, the method may be implemented by a mobile terminal, and include the following steps.

In step 201, communication records are obtained from local users or other users.

In step 202, communication records related to communication identification corresponding to itself are selected from the obtained communication records. That is, the communication identification corresponding to itself is used as the communication records as senders and the communication records as receivers.

In step 203, use frequencies corresponding to respective communication identifications are determined according to occurrence time and occurrence times of the selected communication records.

In step 204, communication identification with the highest use frequency is determined according to the use frequencies corresponding to the respective communication identifications.

In step 205, a markup instruction is generated according to the often-used communication identification, and the markup instruction is sent to a terminal storing the communication identifications of the current user, so that the often-used communication identification of the current user is marked by the terminal.

The other user may mark the received communication identification as the often-used communication identification.

The present embodiment describes the implementation process for processing communication identification at the mobile terminal. And the use frequency is counted from multi dimension such as occurrence time and occurrence times, the obtained use frequency is more accurate, and then the determined often-used communication identification is also more accurate.

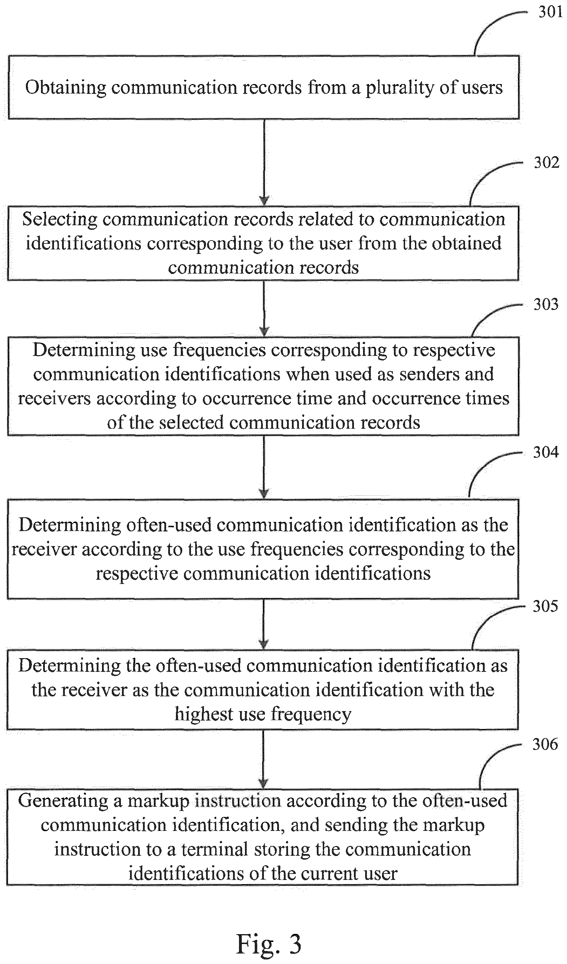

Fig. 3 is a flow chart showing a method for processing communication identification according to an exemplary embodiment. As shown in Fig. 3, the method may be implemented by a server, and include the following steps.

In step 301, communication records are obtained from a plurality of users.

The server continues to perform the following steps for each user.

In step 302, communication records related to communication identification corresponding to the user are selected from the obtained communication records.

For example, the server receives the communication records which are sent by the user through IM account 1, and the server locally stores phone number 1, phone number 2, email 1 and email 2 related to the IM account 1. Then, the server may pick out the communication records about the IM account 1, phone number 1, phone number 2, email 1 and email 2. The communication records respectively corresponding to the IM account, phone number and email may be further subdivided.

In step 303, use frequency corresponding to respective communication identifications when used as the senders and the receivers is determined according to occurrence time and occurrence times of the selected communication records.

In step 304, the often-used communication identification as the receiver is determined according to the use frequencies corresponding to the respective communication identifications.

For example, the server may determine the communication identification with the highest use frequency from the use frequencies respectively corresponding to the IM account 1, phone number 1, phone number 2, email 1 and email 2. And, a more appropriate communication manner may be determined. For example, the communication identification with the highest use frequency is the IM account 1, which illustrates that the user is easier to contact the IM compared with the telephone and email.

Or, the server classifies and determines the communication identification with the highest use frequency. For example, the server determines the communication identification with the highest use frequency from the use frequencies respectively corresponding to the phone number 1 and the phone number 2.

In step 305, the often-used communication identification as the receiver is determined as the communication identification with the highest use frequency.

In step 306, a markup instruction is generated according to the often-used communication identification, and the markup instruction is sent to a terminal storing the communication identifications of the current user.

The present embodiment describes the implementation process of processing communication identification from the standpoint of the server. The server may determine the often-used communication identification for a plurality of users in the network. The communication records obtained by the server may be broader, more comprehensive, and the efficiency of centralized statistical use frequency is higher.

The implementation process of processing communication identification is understood through the above introduction, and the process is implemented by the mobile terminal or the server. Reference will now be made in detail to the internal structure and functions of the apparatus.

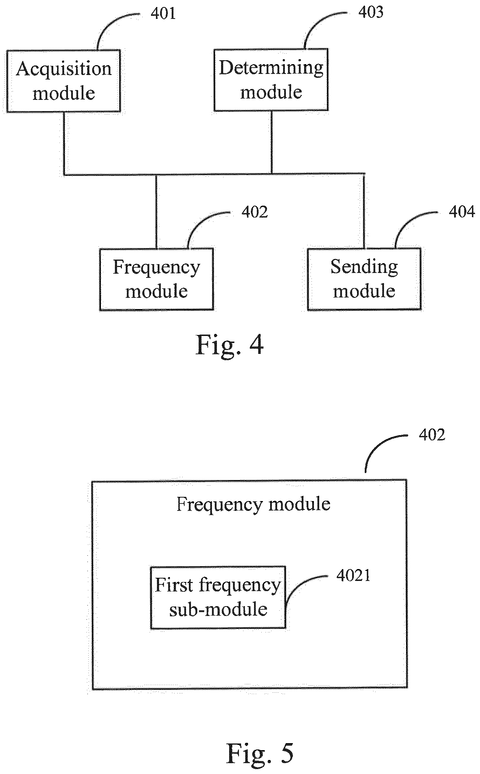

Fig. 4 is a block diagram showing an apparatus for processing communication identification according to an exemplary embodiment. Referring to Fig. 4, the apparatus includes: an acquisition module 401, a frequency module 402, a determining module 403 and a sending module 404. The apparatus may be a mobile terminal or a server.

The acquisition module 401 is configured to obtain communication records about a plurality of communication identifications of a current user.

The frequency module 402 is configured to determine use frequencies corresponding to respective communication identifications in the plurality of communication identifications according to the obtained communication records.

The determining module 403 is configured to determine the communication identification with the highest use frequency as the often-used communication identification according to the use frequencies corresponding to the respective communication identifications.

The sending module 404 is configured to generate a markup instruction according to the often-used communication identification, and send the markup instruction to a terminal storing the communication identifications of the current user, so that the often-used communication identification of the current user is marked by the terminal.

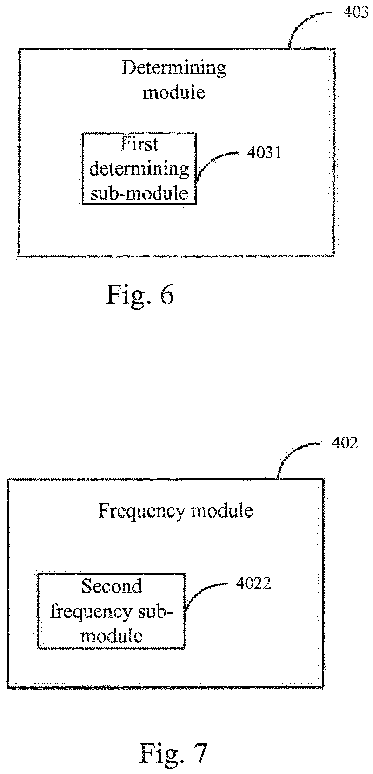

In an embodiment, as shown in Fig. 5 and Fig. 6, the frequency module 402 includes: a first frequency sub-module 4021.

The first frequency sub-module 4021 is configured to determine the use frequencies corresponding to the respective communication identifications when used as receivers or senders according to the obtained communication records.

The determining module 403 includes: a first determining sub-module 4031.

The first determining sub-module 4031 is configured to determine the communication identification with the highest use frequency according to the use frequencies corresponding to the respective communication identifications when used as the receivers or the senders.

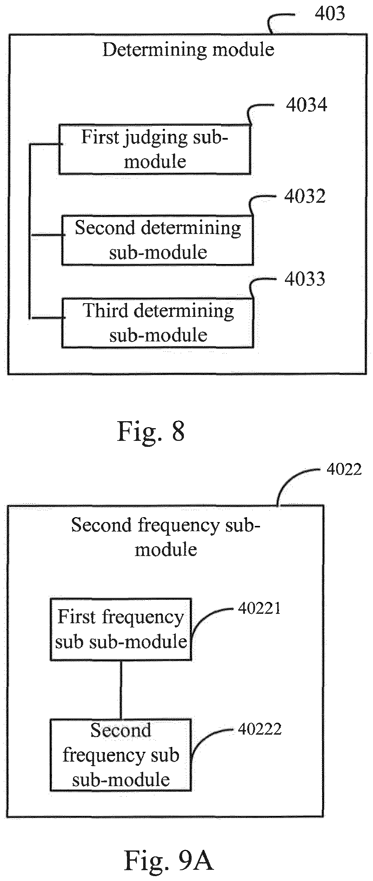

In an embodiment, as shown in Fig. 7 and Fig. 8, the frequency module 402 includes: a second frequency sub-module 4022.

The second frequency sub-module 4022 is configured to determine the use frequencies respectively corresponding to the respective communication identifications when used as senders and receivers according to the obtained communication records.

The determining module 403 includes: a first judging sub-module 4034, a second determining sub-module 4032 and a third determining sub-module 4033.

The first judging sub-module 4034 is configured to judge whether a difference value between use frequency of the communication identification when used as the senders and use frequency of the communication identification when used as the receivers is in a range of a preset difference value as for the respective communication identifications.

The second determining sub-module 4032 is configured to determine the communication identification of the receiver, and determining the use frequency of the communication identification when the difference value between the use frequency when used as the senders and the use frequency when used as the receivers is in the range of the preset difference value.

The third determining sub-module 4033 is configured to determine the communication identification with the highest use frequency in the communication identifications when used as the receivers as the often-used communication identification.

In an embodiment, as shown in Fig. 9A, the second frequency sub-module 4022 includes: a first frequency sub sub-module 40221 and a second frequency sub sub-module 40222.

The first frequency sub sub-module 40221 is configured to determine the use frequencies corresponding to the respective communication identifications when used as the senders according to a preset weight value and the obtained communication records.

The second frequency sub sub-module 40222 is configured to determine the use frequencies corresponding to the respective communication identifications when used as the receivers according to another preset weight value and the obtained communication records.

Herein, the preset weight value for determining the use frequencies corresponding to the respective communication identifications when used as the receivers is greater than the present weight value for determining the use frequencies corresponding to the respective communication identifications when used as the senders.

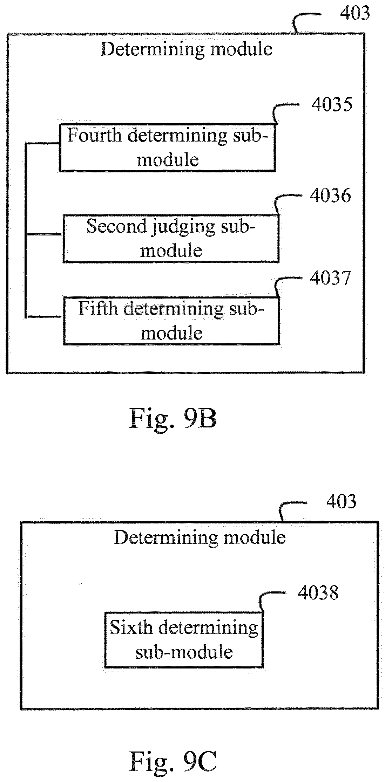

In an embodiment, the second frequency sub-module 4022 is configured to determine the use frequencies respectively corresponding to the respective communication identifications when used as the receivers according to the obtained communication records. As shown in Fig. 9B, the determining module 403 includes: a fourth determining sub-module 4035, a second judging sub-module 4036 and a fifth determining sub-module 4037.

The fourth determining sub-module 4035 is configured to determine the maximum use frequency among the use frequencies corresponding to the respective communication identifications when used as the receivers.

The second judging sub-module 4036 is configured to judge whether the maximum use frequency when used as the receivers is greater than a preset receiver threshold.

The fifth determining sub-module 4037 is configured to determine the communication identification corresponding to the maximum use frequency when used as the receivers as the often-used communication identification if the maximum use frequency when used as the receivers is greater than the preset receiver threshold.

In an embodiment, as shown in Fig. 9C, the determining module 403 includes: a sixth determining sub-module 4038.

The sixth determining sub-module 4038 is configured to determine the use frequencies corresponding to the respective communication identifications when used as the receivers according to connected states of the communication records and weight values corresponding to the connected state.

Wherein the communication records are call records, the connected state includes: a call signal is connected and the called party answers, the call signal is connected and the called party does not answer and the call signal is not connected, which respectively corresponding to a first weight value, a second weight value and a third weight value, the first weight value is greater than the second weight value and is greater than the third weight value.

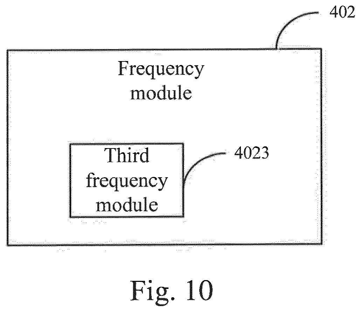

In an embodiment, as shown in Fig. 10, the frequency module 402 includes: a third frequency sub-module 4023.

The third frequency sub-module 4023 is configured to determine the use frequencies corresponding to the respective communication identifications according to occurrence time and occurrence times of the respective communication identifications in the communication records obtained in a preset time length.

With regard to the device in the above embodiment, a detailed description of the specific manner for conducting operation of modules has been made in the embodiment related to the method, and no detailed illustration will be made herein.

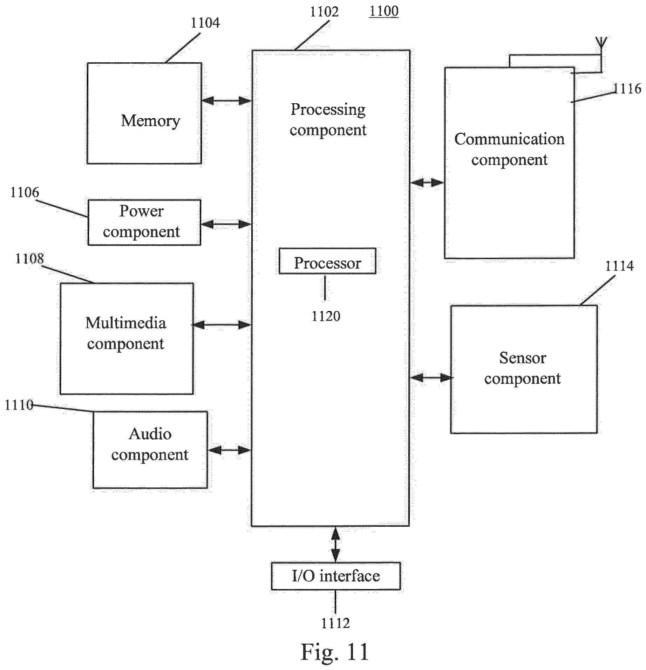

Fig. 11 is a block diagram showing a device 1100 for processing communication identification according to an exemplary embodiment. For example, the device 1100 may be a mobile phone, a computer, a digital broadcast terminal, a messaging device, a gaming console, a tablet, a medical device, exercise equipment, a personal digital assistant (PDA), and the like.

Referring to Fig. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 usually controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any application or method operated on the device 1100, contact data, phonebook data, messages, pictures, videos, etc. The memory 1104 may be implemented using any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1108 includes a front camera and/or a rear camera. The front camera and/or the rear camera may receive an external multimedia datum while the device 1100 is in an operation manner, such as a photographing manner or a video manner. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the device 1100 is in an operation manner, such as a call manner, a recording manner, and a voice identification manner. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, a button, and the like. The button may include, but not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keyboard, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 may access a wireless network based on a communication standard, such as WI-FI, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method.

In exemplary embodiments, there is also provided a non-transitory computer readable storage medium including instructions, such as included in the memory 1104, executable by the processor 1120 in the device 1100, for performing the above method. For example, the non-transitory computer-readable storage medium may be a ROM, a random access memory (RAM), a CD-ROM, a magnetic tape, a floppy disc, an optical data storage device, and the like.

In exemplary embodiments, there is provided an apparatus for processing communication identification, including:
a processor; and
a memory for storing instructions executable by the processor;
wherein the processor is configured to:
   obtain communication records about a plurality of communication identifications of a current user;
   determine use frequencies corresponding to respective communication identifications according to the obtained communication records;
   determine communication identification with the highest use frequency according to the use frequencies corresponding to the respective communication identifications; and
   send the communication identification with the highest use frequency and a preset marker to other user other than the current user, the marker being used for informing the other user that the sent communication identification is often-used communication identification.

The processor may also be configured such that:
the determining the use frequencies corresponding to the respective communication identifications according to the obtained communication records includes:
   determining the use frequencies corresponding to the respective communication identifications when used as receivers or senders according to the obtained communication records;
   the determining the communication identification with the highest use frequency according to the use frequencies corresponding to the respective communication identifications includes:
      determining the communication identification with the highest use frequency according to the use frequencies corresponding to the respective communication identifications when used as the receivers or the senders.

The processor may also be configured such that:
the determining the use frequencies corresponding to the respective communication identifications according to the obtained communication records includes:
   determining the use frequencies respectively corresponding to the respective communication identifications when used as senders and receivers according to the obtained communication records;
   the determining the communication identification with the highest use frequency as the often-used communication identification according to the use frequencies corresponding to the respective communication identifications includes:
      judging whether the communication identification is the often-used communication identification as the receiver according to the use frequencies respectively corresponding to the communication identification when used as the senders and the receiver as for the respective communication identifications; and
      determining the communication identification as the communication identification with the highest use frequency when the communication identification is the often-used communication identification as the receiver.

The processor may also be configured such that:
the determining the use frequencies respectively corresponding to the respective communication identifications when used as the senders and the receiver according to the obtained communication records includes:
   determining the use frequencies corresponding to the respective communication identifications when used as the senders according to a preset weight value and the obtained communication records; and
   determining the use frequencies corresponding to the respective communication identifications when used as the receivers according to another preset weight value and the obtained communication records;
   wherein, the preset weight value for determining the use frequencies corresponding to the respective communication identifications when used as the receivers is greater than the preset weight value for determining the use frequencies corresponding to the respective communication identifications when used as the senders.

The processor may also be configured such that:
the determining the use frequencies corresponding to the respective communication identifications according to the obtained communication records includes:
   determining the use frequencies corresponding to the respective communication identifications according to occurrence time and occurrence times of the respective communication identifications in the obtained communication records.

In exemplary embodiments, there is provided a non-transitory computer readable storage medium, which when instructions in the storage medium are executed by the processor of a terminal, the terminal may execute a method for processing communication identification, the method including:
obtaining communication records about a plurality of communication identifications of a current user;
determining use frequencies corresponding to respective communication identifications according to the obtained communication records;
determining communication identification with the highest use frequency according to the use frequencies corresponding to the respective communication identifications; and
sending the communication identification with the highest use frequency and a preset marker to other user other than the current user, the marker being used for informing the other user that the sent communication identification is often-used communication identification.

The instructions in the storage medium may further include:
the determining the use frequencies corresponding to the respective communication identifications according to the obtained communication records includes:
   determining the use frequencies corresponding to the respective communication identifications when used as receivers or senders according to the obtained communication records;
   the determining the communication identification with the highest use frequency according to the use frequencies corresponding to the respective communication identifications includes:
      determining the communication identification with the highest use frequency according to the use frequencies corresponding to the respective communication identifications when used as the receivers or the senders.

The instructions in the storage medium may further include:
the determining the use frequencies corresponding to the respective communication identifications according to the obtained communication records includes:
   determining the use frequencies respectively corresponding to the respective communication identifications when used as senders and receivers according to the obtained communication records;
   the determining the communication identification with the highest use frequency as the often-used communication identification according to the use frequencies corresponding to the respective communication identifications includes:
      judging whether the communication identification is the often-used communication identification as the receiver according to the use frequencies respectively corresponding to the communication identification when used as the senders and the receiver as for the respective communication identifications; and
      determining the communication identification as the communication identification with the highest use frequency when the communication identification is the often-used communication identification as the receiver.

The instructions in the storage medium may further include:
the determining the use frequencies respectively corresponding to the respective communication identifications when used as the senders and the receiver according to the obtained communication records includes:
   determining the use frequencies corresponding to the respective communication identifications when used as the senders according to a preset weight value and the obtained communication records; and
   determining the use frequencies corresponding to the respective communication identifications when used as the receivers according to another preset weight value and the obtained communication records;
   wherein the preset weight value for determining the use frequencies corresponding to the respective communication identifications when used as the receivers is greater than the preset weight value for determining the use frequencies corresponding to the respective communication identifications when used as the senders.

The instructions in the storage medium may further include:
the determining the use frequencies corresponding to the respective communication identifications according to the obtained communication records includes:
   determining the use frequencies corresponding to the respective communication identifications according to occurrence time and occurrence times of the respective communication identifications in the obtained communication records.

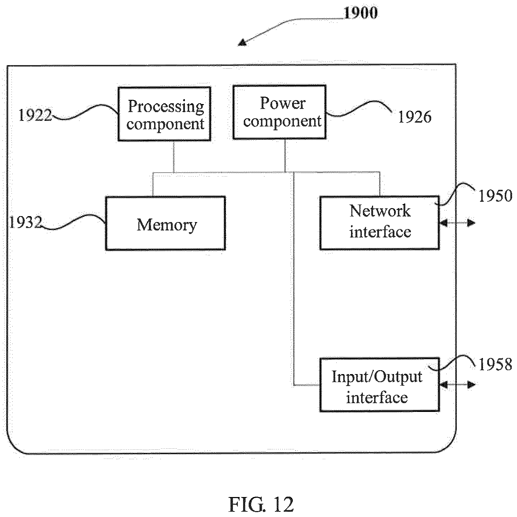

Fig. 12 is a block diagram of an apparatus 1900 for processing communication identification according to an exemplary embodiment. For example, the apparatus 1900 may be provided as a computer. As shown in Fig. 12, the apparatus 1900 includes a processing component 1922 that further includes one or more processors, and memory resources represented by a memory 1932 for storing instructions, such as application programs, executable by the processing component 1922. The application programs stored in memory 1932 may include one or more modules, each of which corresponds to a set of instructions. Moreover, the processing component 1922 is configured to execute instructions for performing the above described method for processing communication identification.

The apparatus 1900 may further include a power component 1926 configured to perform power management of the apparatus 1900, wired or wireless network interface(s) 1950 configured to connect the apparatus 1900 to a network, and an input/output (I/O) interface 1958. The apparatus 1900 may operate an operating system stored in the memory 1932, such as Windows ServerTM, Mac OS XTM, UnixTM, LinuxTM, FreeBSDTM, or the like.

In exemplary embodiments there is provided an apparatus for processing communication identification, including:
a processor; and
a memory for storing instructions executable by the processor;
wherein the processor is configured to:
   obtain communication records about a plurality of communication identifications of a current user;
   determine use frequencies corresponding to respective communication identifications in the plurality of communication identifications according to the obtained communication records;
   determine communication identification with the highest use frequency as often-used communication identification according to the use frequencies corresponding to the respective communication identifications; and
   generate a markup instruction according to the often-used communication identification, and send the markup instruction to a terminal storing the communication identifications of the current user, so that the often-used communication identification of the current user is marked by the terminal.

The processor may also be configured such that:
the determining the use frequencies corresponding to the respective communication identifications according to the obtained communication records includes:
   determining the use frequencies corresponding to the respective communication identifications when used as receivers or senders according to the obtained communication records;
   the determining the communication identification with the highest use frequency according to the use frequencies corresponding to the respective communication identifications includes:
      determining the communication identification with the highest use frequency according to the use frequencies corresponding to the respective communication identifications when used as the receivers or the sender.

The processor may also be configured such that:
the determining the use frequencies corresponding to the respective communication identifications according to the obtained communication records includes:
   determining the use frequencies respectively corresponding to the respective communication identifications when used as senders and receivers according to the obtained communication records;
   the determining the communication identification with the highest use frequency as the often-used communication identification according to the use frequencies corresponding to the respective communication identifications includes:
      for each of the communication identifications, judging whether the communication identification is the often-used communication identification as the receiver according to the use frequencies respectively corresponding to the communication identification when used as the senders and the receivers; and
      determining the communication identification as the communication identification with the highest use frequency when the communication identification is the often-used communication identification as the receiver.

The processor may also be configured such that:
the determining the use frequencies respectively corresponding to the respective communication identifications when used as the senders and the receiver according to the obtained communication records includes:
   determining the use frequencies corresponding to the respective communication identifications when used as the senders according to a preset weight value and the obtained communication records; and
   determining the use frequencies corresponding to the respective communication identifications when used as the receivers according to another preset weight value and the obtained communication records;
   wherein the preset weight value for determining the use frequencies corresponding to the respective communication identifications when used as the receivers is greater than the preset weight value for determining the use frequencies corresponding to the respective communication identifications when used as the senders.

The processor may also be configured such that:
the determining the use frequencies corresponding to the respective communication identifications according to the obtained communication records includes:
   determining the use frequencies corresponding to the respective communication identifications according to occurrence time and occurrence times of the respective communication identifications in the obtained communication records.

In exemplary embodiments there is provided a non-transitory computer readable storage medium, when instructions in the storage medium are executed by the processor of a terminal, makes the terminal execute a method for processing communication identification, wherein the method includes:
obtaining communication records about a plurality of communication identifications of a current user;
determining use frequencies corresponding to respective communication identifications in the plurality of communication identifications according to the obtained communication records;
determining communication identification with the highest use frequency as often-used communication identification according to the use frequencies corresponding to the respective communication identifications; and
generating a markup instruction according to the often-used communication identification, and sending the markup instruction to a terminal storing the communication identifications of the current user, so that the often-used communication identification of the current user is marked by the terminal.

The instructions in the storage medium may further include:
the determining the use frequencies corresponding to the respective communication identifications according to the obtained communication records includes:
   determining the use frequencies corresponding to the respective communication identifications when used as receivers or senders according to the obtained communication records;
   the determining the communication identification with the highest use frequency according to the use frequencies corresponding to the respective communication identifications includes:
      determining the communication identification with the highest use frequency according to the use frequencies corresponding to the respective communication identifications when used as the receivers or the sender.

The instructions in the storage medium may further include:
the determining the use frequencies corresponding to the respective communication identifications according to the obtained communication records includes:
   determining the use frequencies respectively corresponding to the respective communication identifications when used as senders and receivers according to the obtained communication records;
   the determining the communication identification with the highest use frequency as the often-used communication identification according to the use frequencies corresponding to the respective communication identifications includes:
      judging whether the communication identification is the often-used communication identification as the receiver according to the use frequencies respectively corresponding to the communication identification when used as the senders and the receiver as for the respective communication identifications; and
      determining the communication identification as the communication identification with the highest use frequency when the communication identification is the often-used communication identification as the receiver.

The instructions in the storage medium may further include:
the determining the use frequencies respectively corresponding to the respective communication identifications when used as the senders and the receiver according to the obtained communication records includes:
   determining the use frequencies corresponding to the respective communication identifications when used as the senders according to a preset weight value and the obtained communication records; and
   determining the use frequencies corresponding to the respective communication identifications when used as the receivers according to another preset weight value and the obtained communication records;
   wherein the preset weight value for determining the use frequencies corresponding to the respective communication identifications when used as the receivers is greater than the preset weight value for determining the use frequencies corresponding to the respective communication identifications when used as the senders.

The instructions in the storage medium may further include:
the determining the use frequencies corresponding to the respective communication identifications according to the obtained communication records includes:
   determining the use frequencies corresponding to the respective communication identifications according to occurrence time and occurrence times of the respective communication identifications in the obtained communication records.

After considering this description and carrying out the embodiments disclosed herein, those skilled in the art may easily anticipate other implementation aspects of the present disclosure. The present disclosure is meant to cover any variations, usage or adaptive change of these embodiments, and these variations, usage or adaptive change follow the general concept of the present disclosure and include the often-used knowledge or the customary technical means in the technical field that is not disclosed in the present disclosure. The description and embodiments are only exemplary, and the present invention is defined by the following claims.

## Claims

1. A method for processing communication identification comprising:
obtaining (101) communication records about a plurality of communication identifications of a user;
determining (102) use frequencies according to the obtained communication records, each use frequency corresponding to a respective communication identification in the plurality of communication identifications, respectively when the communication identification is used to identify the user as a sender and a receiver;
determining (103) the communication identification with the highest use frequency as an often-used communication identification according to the use frequencies corresponding to the respective communication identifications, by:
for each of the communication identifications, judging whether a difference value between the use frequency of the communication identification when used to identify the user as a sender and the use frequency of the communication identification when used to identify the user as a receiver is in a range of a preset difference value;
when the difference value is in the range of the preset difference value, determining that the communication identification is used to identify the user as a receiver, and determining the use frequency of the communication identification when used to identify the user as a receiver; and
determining, from the communication identifications determined as identifying the user as a receiver, the communication identification with the highest use frequency when used to identify the user as a receiver as the often-used communication identification; and
generating (104) a markup instruction according to the often-used communication identification, and sending the markup instruction to a terminal storing the communication identifications of the user, so that the often-used communication identification of the user is marked by the terminal.

2. The method for processing communication identification according to claim 1, **characterized in that** the determining the use frequencies corresponding to the respective communication identifications according to the obtained communication records (102) comprises:
determining use frequencies respectively corresponding to the respective communication identifications when used as the receivers according to the obtained communication records; and
the determining the communication identification with the highest use frequency as the often-used communication identification according to the use frequencies corresponding to the respective communication identifications comprises:
determining the maximum use frequency among the use frequencies corresponding to the respective communication identifications when used as the receiver;
judging whether the maximum use frequency when used as the receiver is greater than a preset receiver threshold; and
determining the communication identification corresponding to the maximum use frequency when used as the receiver as the often-used communication identification if the maximum use frequency when used as the receiver is greater than the preset receiver threshold.

3. The method for processing communication identification according to claim 1 or 2, **characterized in that** the determining the use frequencies corresponding to the respective communication identifications when used as the receivers comprises:
determining use frequencies corresponding to the respective communication identifications when used as the receivers according to connected states of the communication records and weight values corresponding to the connected state;
wherein the communication records are call records, and the connected state comprises: a state in which a call signal is connected and the called party answers, a state in which the call signal is connected and the called party does not answer and a state in which the call signal is not connected, which respectively corresponds to a first weight value, a second weight value and a third weight value, wherein the first weight value is greater than the second weight value and is greater than the third weight value.

4. The method for processing communication identification according to claim 1, **characterized in that** the determining the use frequencies corresponding to the respective communication identifications according to the obtained communication records (102) comprises:
determining the use frequencies corresponding to the respective communication identifications according to occurrence time and occurrence times of the respective communication identifications in the communication records obtained in a preset time length.

5. An apparatus for processing communication identification, comprising:
an acquisition module (401) configured to obtain communication records about a plurality of communication identifications of a user;
a frequency module (402) configured to determine use frequencies according to the obtained communication records, each use frequency corresponding to a respective communication identification in the plurality of communication identifications, respectively when the communication identification is used to identify the user as a sender and a receiver;
a determining module (403) configured to determine communication identification with the highest use frequency as an often-used communication identification according to the use frequencies corresponding to the respective communication identifications, the determining module comprising:
a first judging sub-module (4034) configured to, for each of the communication identifications, judge whether a difference value between use frequency of the communication identification when used to identify the user as a sender and the use frequency of the communication identification when used to identify the user as a receiver is in a range of a preset difference value;
a second determining sub-module (4032) configured to, when the difference value is in the range of the preset difference value, determine that the communication identification is used to identify the user as a receiver, and determine the use frequency of the communication identification when used to identify the user as a receiver; and
a third determining sub-module (4033) configured to determine, from the communication identifications determined as identifying the user as a receiver, the communication identification with the highest use frequency when used to identify the user as a receiver as the often-used communication identification; and
a sending module (404) configured to generate a markup instruction according to the often-used communication identification, and send the markup instruction to a terminal storing the communication identifications of the user, so that the often-used communication identification of the user is marked by the terminal.

6. The apparatus for processing communication identification according to claim 5, **characterized in that** the frequency module (402) comprises: a second frequency sub-module (4022) configured to determine the use frequencies respectively corresponding to the respective communication identifications when used as the receivers according to the obtained communication records; and
the determining module (403) comprises:
a fourth determining sub-module (4035) configured to determine the maximum use frequency among the use frequencies corresponding to the respective communication identifications when used as the receivers;
a second judging sub-module (4036) configured to judge whether the maximum use frequency when used as the receiver is greater than a preset receiver threshold; and
a fifth determining sub-module (4037) configured to determine the communication identification corresponding to the maximum use frequency when used as the receiver as the often-used communication identification if the maximum use frequency when used as the receiver is greater than the preset receiver threshold.

7. The apparatus for processing communication identification according to claim 6, **characterized in that** the determining module (403) comprises:
a sixth determining sub-module (4038) configured to determine the use frequencies corresponding to the respective communication identifications when used as the receivers according to connected states of the communication records and weight values corresponding to the connected state;
wherein the communication records are call records, and the connected state comprises: a state in which a call signal is connected and the called party answers, a state in which the call signal is connected and the called party does not answer and a state in which the call signal is not connected, which respectively corresponds to a first weight value, a second weight value and a third weight value, wherein the first weight value is greater than the second weight value and is greater than the third weight value.

8. The apparatus for processing communication identification according to claim 5, **characterized in that**, the frequency module (402) comprises:
a second frequency sub-module (4023) configured to determine the use frequencies corresponding to the respective communication identifications according to occurrence time and occurrence times of the respective communication identifications in the communication records obtained in a preset time length.

9. A computer program product stored on a computer usable medium, comprising computer-readable program means for causing a mobile terminal to implement the method according to any one of claims 1 to 4.

## Patentansprüche

1. Verfahren zum Verarbeiten von Kommunikationsidentifizierung, Folgendes umfassend:
Erhalten (101) von Kommunikationsaufzeichnungen zu mehreren Kommunikationsidentifikationen eines Benutzers;
Bestimmen (102) von Nutzungshäufigkeiten auf der Grundlage der erhaltenen Kommunikationsaufzeichnungen, wobei jede Nutzungshäufigkeit einer entsprechenden Kommunikationsidentifikation der mehreren Kommunikationsidentifikationen entspricht, wenn die Kommunikationsidentifikation eingesetzt wird, um den Benutzer als einen Sender beziehungsweise einen Empfänger zu identifizieren;
Bestimmen (103) der Kommunikationsidentifikation mit der höchsten Nutzungshäufigkeit als eine häufig genutzte Kommunikationsidentifikation auf der Grundlage der Nutzungshäufigkeiten, die den jeweiligen Kommunikationsidentifikationen entsprechen, durch:
Auswerten, für jede der Kommunikationsidentifikationen, ob ein Differenzwert zwischen der Nutzungshäufigkeit der Kommunikationsidentifikation, wenn zum Identifizieren des Benutzers als einen Sender eingesetzt, und der Nutzungshäufigkeit der Kommunikationsidentifikation, wenn zum Identifizieren des Benutzers als einen Empfänger eingesetzt, in einem Bereich eines vorgegebenen Differenzwertes liegt;
Bestimmen, wenn der Differenzwert in dem Bereich des vorgegebenen Differenzwerts liegt, dass die Kommunikationsidentifikation eingesetzt wird, um den Benutzer als einen Empfänger zu identifizieren, und Bestimmen der Nutzungshäufigkeit der Kommunikationsidentifikation, wenn zum Identifizieren des Benutzers als einen Empfänger eingesetzt; und
Bestimmen, aus den Kommunikationsidentifikationen, die als solche bestimmt worden sind, dass sie den Benutzer als einen Empfänger identifizieren, derjenigen Kommunikationsidentifikation mit der höchsten Nutzungshäufigkeit, wenn zum Identifizieren des Benutzers als einen Empfänger eingesetzt, als die häufig genutzte Kommunikationsidentifikation; und
Erzeugen (104) einer Kennzeichnungsanweisung im Einklang mit der häufig genutzten Kommunikationsidentifikation und Senden der Kennzeichnungsanweisung an ein Endgerät, in dem die Kommunikationsidentifikationen des Benutzers gespeichert sind, sodass die häufig genutzte Kommunikationsidentifikation des Benutzers durch das Endgerät gekennzeichnet wird.

2. Verfahren zum Verarbeiten von Kommunikationsidentifikation nach Anspruch 1, **dadurch gekennzeichnet, dass** das Bestimmen der Nutzungshäufigkeiten im Einklang mit den jeweiligen Kommunikationsidentifikationen auf der Grundlage der erhaltenen Kommunikationsaufzeichnungen (102) Folgendes umfasst:
Bestimmen von Nutzungshäufigkeiten, die jeweils den jeweiligen Kommunikationsidentifikationen entsprechen, wenn nach den erhaltenen Kommunikationsaufzeichnungen als die Empfänger eingesetzt; und
wobei das Bestimmen der Kommunikationsidentifikation mit der höchsten Nutzungshäufigkeit als die häufig genutzte Kommunikationsidentifikation auf der Grundlage der Nutzungshäufigkeiten, die den jeweiligen Kommunikationsidentifikationen entsprechen, Folgendes umfasst:
Bestimmen der maximalen Nutzungshäufigkeit unter den Nutzungshäufigkeiten im Einklang mit den jeweiligen Kommunikationsidentifikationen, wenn als der Empfänger eingesetzt;
Auswerten, ob die maximale Nutzungshäufigkeit, wenn als der Empfänger eingesetzt, größer ist als ein vorgegebener Empfängerschwellenwert; und
Bestimmen der Kommunikationsidentifikation, die der maximalen Nutzungshäufigkeit, wenn als der Empfänger eingesetzt, entspricht, als die häufig genutzte Kommunikationsidentifikation, sofern die maximale Nutzungshäufigkeit, wenn als der Empfänger eingesetzt, größer ist als der vorgegebene Empfängerschwellenwert.

3. Verfahren zum Verarbeiten von Kommunikationsidentifikation nach Anspruch 1 oder 2, **dadurch gekennzeichnet, dass** das Bestimmen der Nutzungshäufigkeiten im Einklang mit den jeweiligen Kommunikationsidentifikationen, wenn als die Empfänger eingesetzt, Folgendes umfasst:
Bestimmen von Nutzungshäufigkeiten im Einklang mit den jeweiligen Kommunikationsidentifikationen, wenn als die Empfänger eingesetzt, nach den Verbindungszuständen der Kommunikationsaufzeichnungen und Gewichtungswerten im Einklang mit dem Verbindungszustand;
wobei die Kommunikationsaufzeichnungen Anrufaufzeichnungen sind und der Verbindungszustand Folgendes umfasst: einen Zustand, in dem ein Anrufsignal verbunden wird und der angerufene Teilnehmer abnimmt, einen Zustand, in dem das Anrufsignal verbunden wird und der angerufene Teilnehmer nicht abnimmt, und einen Zustand, in dem das Anrufsignal nicht verbunden wird, jeweils entsprechend einem ersten Gewichtungswert, einem zweiten Gewichtungswert und einem dritten Gewichtungswert, wobei der erste Gewichtungswert größer ist als der zweite Gewichtungswert und größer ist als der dritte Gewichtungswert.

4. Verfahren zum Verarbeiten von Kommunikationsidentifikation nach Anspruch 1, **dadurch gekennzeichnet, dass** das Bestimmen der Nutzungshäufigkeiten im Einklang mit den jeweiligen Kommunikationsidentifikationen auf der Grundlage der erhaltenen Kommunikationsaufzeichnungen (102) Folgendes umfasst:
Bestimmen der Nutzungshäufigkeiten, die den jeweiligen Kommunikationsidentifikationen entsprechen, im Einklang mit Auftrittszeit und Auftrittshäufigkeit der jeweiligen Kommunikationsidentifikationen in den in einer vorgegebenen Zeitspanne erhaltenen Kommunikationsaufzeichnungen.

5. Vorrichtung zum Verarbeiten von Kommunikationsidentifikation, Folgendes umfassend:
ein Erfassungsmodul (401), konfiguriert zum Erhalten von Kommunikationsaufzeichnungen zu mehreren Kommunikationsidentifikationen eines Benutzers;
ein Häufigkeitsmodul (402), konfiguriert zum Bestimmen von Nutzungshäufigkeiten auf der Grundlage der erhaltenen Kommunikationsaufzeichnungen, wobei jede Nutzungshäufigkeit einer jeweiligen Kommunikationsidentifikation der mehreren Kommunikationsidentifikationen entspricht, wenn die Kommunikationsidentifikation eingesetzt wird, um den Benutzer als einen Sender beziehungsweise einen Empfänger zu identifizieren;
ein Bestimmungsmodul (403), konfiguriert zum Bestimmen einer Kommunikationsidentifikation mit der höchsten Nutzungshäufigkeit als eine häufig genutzte Kommunikationsidentifikation auf der Grundlage der Nutzungshäufigkeiten, die den jeweiligen Kommunikationsidentifikationen entsprechen, wobei das Bestimmungsmodul Folgendes umfasst:
ein erstes Auswertungs-Untermodul (4034), konfiguriert zum Auswerten, für jede der Kommunikationsidentifikationen, ob ein Differenzwert zwischen einer Nutzungshäufigkeit der Kommunikationsidentifikation, wenn zum Identifizieren des Benutzers als einen Sender eingesetzt, und der Nutzungshäufigkeit der Kommunikationsidentifikation, wenn zum Identifizieren des Benutzers als einen Empfänger eingesetzt, in einem Bereich eines vorgegebenen Differenzwertes liegt;
ein zweites Bestimmungs-Untermodul (4032), konfiguriert zum Bestimmen, wenn der Differenzwert in dem Bereich des vorgegebenen Differenzwerts liegt, dass die Kommunikationsidentifikation eingesetzt wird, um den Benutzer als einen Empfänger zu identifizieren, und Bestimmen der Nutzungshäufigkeit der Kommunikationsidentifikation, wenn zum Identifizieren des Benutzers als einen Empfänger eingesetzt; und
ein drittes Bestimmungs-Untermodul (4033), konfiguriert zum Bestimmen, aus den Kommunikationsidentifikationen, die als solche bestimmt worden sind, dass sie den Benutzer als einen Empfänger identifizieren, derjenigen Kommunikationsidentifikation mit der höchsten Nutzungshäufigkeit, wenn zum Identifizieren des Benutzers als einen Empfänger eingesetzt, als die häufig genutzte Kommunikationsidentifikation; und
ein Sendemodul (404), konfiguriert zum Erzeugen einer Kennzeichnungsanweisung im Einklang mit der häufig genutzten Kommunikationsidentifikation und Senden der Kennzeichnungsanweisung an ein Endgerät, in dem die Kommunikationsidentifikationen des Benutzers gespeichert sind, sodass die häufig genutzte Kommunikationsidentifikation des Benutzers durch das Endgerät gekennzeichnet wird.

6. Vorrichtung zum Verarbeiten von Kommunikationsidentifikation nach Anspruch 5, **dadurch gekennzeichnet, dass** das Häufigkeitsmodul (402) Folgendes umfasst:
ein zweites Häufigkeits-Untermodul (4022), konfiguriert zum Bestimmen der Nutzungshäufigkeiten, die jeweils den jeweiligen Kommunikationsidentifikationen entsprechen, wenn als die Empfänger eingesetzt, auf der Grundlage der erhaltenen Kommunikationsaufzeichnungen; und
das Bestimmungsmodul (403) Folgendes umfasst:
ein viertes Bestimmungs-Untermodul (4035), konfiguriert zum Bestimmen der maximalen Nutzungshäufigkeit unter den Nutzungshäufigkeiten im Einklang mit den jeweiligen Kommunikationsidentifikationen, wenn als die Empfänger eingesetzt;
ein zweites Auswertungs-Untermodul (4036), konfiguriert, um auszuwerten, ob die maximale Nutzungshäufigkeit, wenn als der Empfänger eingesetzt, größer ist als ein vorgegebener Empfängerschwellenwert; und
ein fünftes Bestimmungs-Untermodul (4037), konfiguriert zum Bestimmen der Kommunikationsidentifikation, die der maximalen Nutzungshäufigkeit, wenn als der Empfänger eingesetzt, entspricht, als die häufig genutzte Kommunikationsidentifikation, sofern die maximale Nutzungshäufigkeit, wenn als der Empfänger eingesetzt, größer ist als der vorgegebene Empfängerschwellenwert.

7. Vorrichtung zum Verarbeiten von Kommunikationsidentifikation nach Anspruch 6, **dadurch gekennzeichnet, dass** das Bestimmungsmodul (403) Folgendes umfasst:
ein sechstes Bestimmungs-Untermodul (4038), konfiguriert zum Bestimmen der Nutzungshäufigkeiten im Einklang mit den jeweiligen Kommunikationsidentifikationen, wenn als die Empfänger eingesetzt, nach den Verbindungszuständen der Kommunikationsaufzeichnungen und Gewichtungswerten im Einklang mit dem Verbindungszustand;
wobei die Kommunikationsaufzeichnungen Anrufaufzeichnungen sind und der Verbindungszustand Folgendes umfasst: einen Zustand, in dem ein Anrufsignal verbunden wird und der angerufene Teilnehmer abnimmt, einen Zustand, in dem das Anrufsignal verbunden wird und der angerufene Teilnehmer nicht abnimmt, und einen Zustand, in dem das Anrufsignal nicht verbunden wird, jeweils entsprechend einem ersten Gewichtungswert, einem zweiten Gewichtungswert und einem dritten Gewichtungswert, wobei der erste Gewichtungswert größer ist als der zweite Gewichtungswert und größer ist als der dritte Gewichtungswert.

8. Vorrichtung zum Verarbeiten von Kommunikationsidentifikation nach Anspruch 5, **dadurch gekennzeichnet, dass** das Häufigkeitsmodul (402) Folgendes umfasst:
ein zweites Häufigkeits-Untermodul (4023), konfiguriert zum Bestimmen der Nutzungshäufigkeiten, die den jeweiligen Kommunikationsidentifikationen entsprechen, im Einklang mit Auftrittszeit und Auftrittshäufigkeit der jeweiligen Kommunikationsidentifikationen in den in einer vorgegebenen Zeitspanne erhaltenen Kommunikationsaufzeichnungen.

9. Computerprogrammprodukt, gespeichert auf einem von einem Computer nutzbaren Medium, umfassend computerlesbare Programmmittel zum Bewirken, dass ein mobiles Endgerät das Verfahren nach einem der Ansprüche 1 bis 4 umsetzt.

## Revendications

1. Procédé de traitement d'identification de communication comprenant :
l'obtention (101) d'enregistrements de communication concernant une pluralité d'identifications de communication d'un utilisateur ;
la détermination (102) de fréquences d'utilisation selon les enregistrements de communication obtenus, chaque fréquence d'utilisation correspondant à une identification de communication respective dans la pluralité d'identifications de communication, respectivement lorsque l'identification de communication est utilisée pour identifier l'utilisateur comme un expéditeur et un récepteur ;
la détermination (103) de l'identification de communication avec la fréquence d'utilisation la plus élevée en tant qu'identification de communication souvent utilisée selon les fréquences d'utilisation correspondant aux identifications de communication respectives, par :
pour chacune des identifications de communication, l'estimation permettant de savoir si une valeur de différence entre la fréquence d'utilisation de l'identification de communication lorsqu'elle est utilisée pour identifier l'utilisateur comme un expéditeur et la fréquence d'utilisation de l'identification de communication lorsqu'elle est utilisée pour identifier l'utilisateur comme un récepteur se trouve dans une plage d'une valeur de différence préétablie ;
lorsque la valeur de différence se trouve dans la plage de la valeur de différence préétablie, la détermination que l'identification de communication est utilisée pour identifier l'utilisateur comme un récepteur, et la détermination de la fréquence d'utilisation de l'identification de communication lorsqu'elle est utilisée pour identifier l'utilisateur comme un récepteur ; et
la détermination, à partir des identifications de communication déterminées comme identifiant l'utilisateur comme un récepteur, de l'identification de communication avec la fréquence d'utilisation la plus élevée lorsqu'elle est utilisée pour identifier l'utilisateur comme un récepteur en tant qu'identification de communication souvent utilisée ; et
la génération (104) d'une instruction de balisage selon l'identification de communication souvent utilisée, et l'envoi de l'instruction de balisage à un terminal stockant les identifications de communication de l'utilisateur, de sorte que l'identification de communication souvent utilisée de l'utilisateur soit balisée par le terminal.

2. Procédé de traitement d'identification de communication selon la revendication 1, **caractérisé en ce que** la détermination des fréquences d'utilisation correspondant aux identifications de communication respectives selon les enregistrements de communication (102) obtenus comprend :
la détermination de fréquences d'utilisation correspondant respectivement aux identifications de communication respectives lorsqu'elles sont utilisées en tant que récepteurs selon les enregistrements de communication obtenus ; et
la détermination de l'identification de communication avec la fréquence d'utilisation la plus élevée en tant qu'identification de communication souvent utilisée selon les fréquences d'utilisation correspondant aux identifications de communication respectives comprend :
la détermination de la fréquence d'utilisation maximale parmi les fréquences d'utilisation correspondant aux identifications de communication respectives lorsqu'elles sont utilisées en tant que récepteur ;
l'estimation permettant de savoir si la fréquence d'utilisation maximale lorsqu'elle est utilisée en tant que récepteur est supérieure à un seuil de récepteur préétabli ; et
la détermination de l'identification de communication correspondant à la fréquence d'utilisation maximale lorsqu'elle est utilisée en tant que récepteur en tant qu'identification de communication souvent utilisée si la fréquence d'utilisation maximale lorsqu'elle est utilisée en tant que récepteur est supérieure au seuil de récepteur préétabli.

3. Procédé de traitement d'identification de communication selon la revendication 1 ou 2, **caractérisé en ce que** la détermination des fréquences d'utilisation correspondant aux identifications de communication respectives lorsqu'elles sont utilisées en tant que récepteur comprend :
la détermination de fréquences d'utilisation correspondant aux identifications de communication respectives lorsqu'elles sont utilisées en tant que récepteurs selon des états connectés des enregistrements de communication et des valeurs pondérées correspondant à l'état connecté ;
dans lequel les enregistrements de communication sont des enregistrements d'appel, et l'état connecté comprend : un état dans lequel un signal d'appel est connecté et l'appelé répond, un état dans lequel le signal d'appel est connecté et l'appelé ne répond pas et un état dans lequel le signal d'appel n'est pas connecté, qui correspondent respectivement à une première valeur pondérée, une deuxième valeur pondérée et une troisième valeur pondérée, dans lequel la première valeur pondérée est supérieure à la deuxième valeur pondérée et est supérieure à la troisième valeur pondérée.

4. Procédé de traitement d'identification de communication selon la revendication 1, **caractérisé en ce que** la détermination des fréquences d'utilisation correspondant aux identifications de communication respectives selon les enregistrements de communication (102) obtenus comprend :
la détermination des fréquences d'utilisation correspondant aux identifications de communication respectives selon un moment de survenue et des moments de survenue des identifications de communication respectives dans les enregistrements de communication obtenus dans une durée préétablie.

5. Appareil de traitement d'identification de communication, comprenant :
un module d'acquisition (401) configuré pour obtenir des enregistrements de communication concernant une pluralité d'identifications de communication d'un utilisateur ;
un module de fréquence (402) configuré pour déterminer des fréquences d'utilisation selon les enregistrements de communication obtenus, chaque fréquence d'utilisation correspondant à une identification de communication respective dans la pluralité d'identifications de communication, respectivement lorsque l'identification de communication est utilisée pour identifier l'utilisateur comme un expéditeur et un récepteur ;
un module de détermination (403) configuré pour déterminer une identification de communication avec la fréquence d'utilisation la plus élevée en tant qu'identification de communication souvent utilisée selon les fréquences d'utilisation correspondant aux identifications de communication respectives, le module de détermination comprenant :
un premier sous-module d'estimation (4034) configuré pour, pour chacune des identifications de communication, estimer si une valeur de différence entre une fréquence d'utilisation de l'identification de communication lorsqu'elle est utilisée pour identifier l'utilisateur comme un expéditeur et la fréquence d'utilisation de l'identification de communication lorsqu'elle est utilisée pour identifier l'utilisateur comme un récepteur se trouve dans une plage d'une valeur de différence préétablie ;
un deuxième sous-module de détermination (4032) configuré pour, lorsque la valeur de différence se trouve dans la plage de la valeur de différence préétablie, déterminer que l'identification de communication est utilisée pour identifier l'utilisateur comme un récepteur, et déterminer la fréquence d'utilisation de l'identification de communication lorsqu'elle est utilisée pour identifier l'utilisateur comme un récepteur ; et
un troisième sous-module de détermination (4033) configuré pour déterminer, à partir des identifications de communication déterminées comme identifiant l'utilisateur comme un récepteur, l'identification de communication avec la fréquence d'utilisation la plus élevée lorsqu'elle est utilisée pour identifier l'utilisateur comme un récepteur en tant qu'identification de communication souvent utilisée ; et
un module d'envoi (404) configuré pour générer une instruction de balisage selon l'identification de communication souvent utilisée, et envoyer l'instruction de balisage à un terminal stockant les identifications de communication de l'utilisateur, de sorte que l'identification de communication souvent utilisée de l'utilisateur soit balisée par le terminal.

6. Appareil de traitement d'identification de communication selon la revendication 5, **caractérisé en ce que** le module de fréquence (402) comprend : un second sous-module de fréquence (4022) configuré pour déterminer les fréquences d'utilisation correspondant respectivement aux identifications de communication respectives lorsqu'elles sont utilisées en tant que récepteurs selon les enregistrements de communication obtenus ; et
le module de détermination (403) comprend :
un quatrième sous-module de détermination (4035) configuré pour déterminer la fréquence d'utilisation maximale parmi les fréquences d'utilisation correspondant aux identifications de communication respectives lorsqu'elles sont utilisées en tant que récepteurs ;
un second sous-module d'estimation (4036) configuré pour estimer si la fréquence d'utilisation maximale lorsqu'elle est utilisée en tant que récepteur est supérieure à un seuil de récepteur préétabli ; et
un cinquième sous-module de détermination (4037) configuré pour déterminer l'identification de communication correspondant à la fréquence d'utilisation maximale lorsqu'elle est utilisée en tant que récepteur en tant qu'identification de communication souvent utilisée si la fréquence d'utilisation maximale lorsqu'elle est utilisée en tant que récepteur est supérieure au seuil de récepteur préétabli.

7. Appareil de traitement d'identification de communication selon la revendication 6, **caractérisé en ce que** le module de détermination (403) comprend :
un sixième sous-module de détermination (4038) configuré pour déterminer les fréquences d'utilisation correspondant aux identifications de communication respectives lorsqu'elles sont utilisées en tant que récepteurs selon des états connectés des enregistrements de communication et des valeurs pondérées correspondant à l'état connecté ;
dans lequel les enregistrements de communication sont des enregistrements d'appel, et l'état connecté comprend : un état dans lequel un signal d'appel est connecté et l'appelé répond, un état dans lequel le signal d'appel est connecté et l'appelé ne répond pas et un état dans lequel le signal d'appel n'est pas connecté, qui correspondent respectivement à une première valeur pondérée, une deuxième valeur pondérée et une troisième valeur pondérée, dans lequel la première valeur pondérée est supérieure à la deuxième valeur pondérée et est supérieure à la troisième valeur pondérée.

8. Appareil de traitement d'identification de communication selon la revendication 5, **caractérisé en ce que**, le module de fréquence (402) comprend :
un second sous-module de fréquence (4023) configuré pour déterminer les fréquences d'utilisation correspondant aux identifications de communication respectives selon un moment de survenue et des moments de survenue des identifications de communication respectives dans les enregistrements de communication obtenus dans une durée préétablie.

9. Produit de programme d'ordinateur stocké sur un support utilisable par ordinateur, comprenant un moyen de programme lisible par ordinateur pour amener un terminal mobile à implémenter le procédé selon l'une quelconque des revendications 1 à 4.
